(19) Europäisches Patentamt
European Patent Office
Office européen des brevets

(11) EP 3 505 495 A1

(12) EUROPEAN PATENT APPLICATION

(43) Date of publication:
03.07.2019 Bulletin 2019/27

(51) Int Cl.:
*C01B 33/20* (2006.01) *C01B 33/32* (2006.01)

(21) Application number: 17306972.5

(22) Date of filing: 29.12.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
- **IMERTECH SAS**
  **75015 Paris (FR)**
- **Université Paul Sabatier Toulouse III**
  **31400 Toulouse (FR)**
- **Centre National de la Recherche Scientifique**
  **75794 Paris Cedex 16 (FR)**

(72) Inventor: **The designation of the inventor has not yet been filed**

(74) Representative: **Haseltine Lake Kempner LLP**
**Redcliff Quay**
**120 Redcliff Street**
**Bristol BS1 6HU (GB)**

# (54) METHOD FOR PREPARING SYNTHETIC PHYLLOSILICATES

(57) A method for drying and optionally functionalizing a synthetic phyllosilicate and the synthetic phyllosilicates obtained by and/or obtainable by said method.

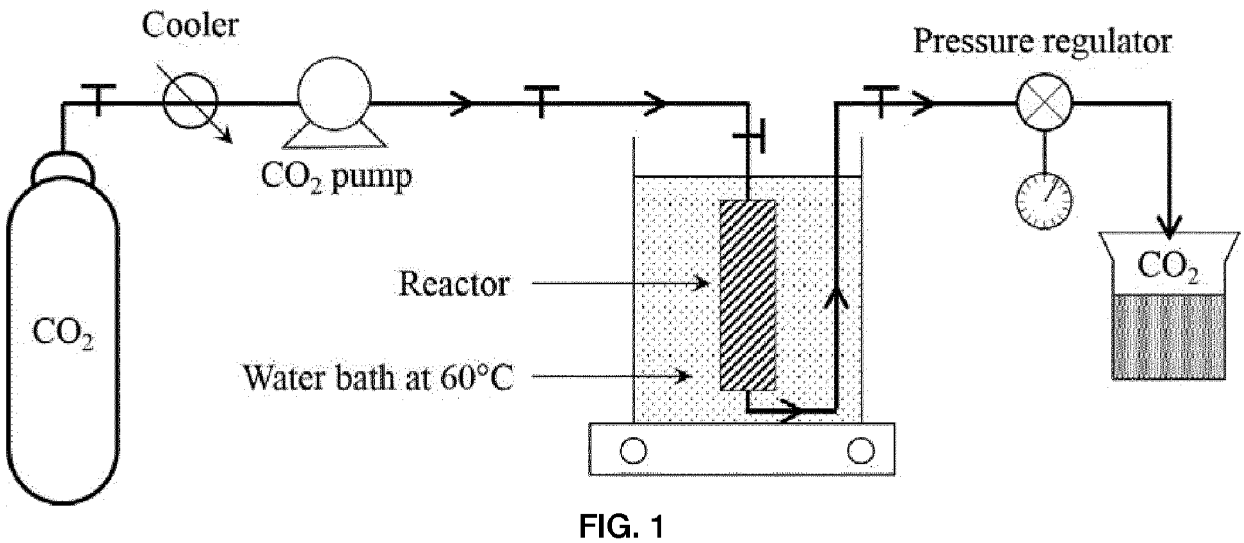


FIG. 1

EP 3 505 495 A1

## Description

### TECHNICAL FIELD

The present invention relates generally to a method for drying and optionally functionalizing a synthetic phyllosilicate and the synthetic phyllosilicates obtained by and/or obtainable by said method. In particular, the present invention generally relates to the use of carbon dioxide, for example supercritical carbon dioxide, to dry a synthetic phyllosilicate such as synthetic talc, wherein the synthetic phyllosilicate may be functionalized prior to drying.

### BACKGROUND

Synthetic phyllosilicates such as talc are widely used in various industrial fields, such as, for example, in rubber, thermoplastics, paper, paints, pharmaceuticals, cosmetics and sanitary products. They can be used as an inert filler (e.g. to reduce the required amount of other, more expensive, fillers) or as functional fillers (e.g. to enhance the mechanical properties of the composition into which they are incorporated). It may be desirable to coat the surface of the synthetic phyllosilicate with a functionalization agent to provide the synthetic phyllosilicate with desirable properties, for example to improve the dispersion of the synthetic phyllosilicate into a matrix. It is therefore desirable to provide alternative and/or improved methods for preparing various synthetic phyllosilicates.

### SUMMARY

In accordance with a first aspect of the present invention there is provided a method for drying a synthetic phyllosilicate, the method comprising:

providing a mixture of the synthetic phyllosilicate and an organic solvent or a non-organic solvent that is miscible with carbon dioxide in a reaction container; and
combining the mixture with carbon dioxide.

In certain embodiments, the method comprises combining the mixture with liquid and/or gaseous carbon dioxide. In certain embodiments, the method further comprises adjusting the temperature and/or pressure of the reaction container to form carbon dioxide liquid. In certain embodiments, the method further comprises adjusting the temperature and pressure of the reaction container above the critical point of carbon dioxide to form supercritical carbon dioxide.

In certain embodiments, the method comprises combining the mixture with supercritical carbon dioxide.

The carbon dioxide may then be removed and/or released from the container after it has been combined with the mixture of the synthetic phyllosilicate and organic solvent or a non-organic solvent that is miscible with carbon dioxide. The carbon dioxide may, for example, be removed/released in liquid form. Alternatively, the carbon dioxide may be removed/released in gas form. The method may, for example, comprise adjusting the temperature and pressure of the reaction container to form carbon dioxide gas, which is then removed/released.

In certain embodiments, the method further comprises adjusting the temperature and pressure of the reaction container from above the critical point of carbon dioxide to below the critical point of carbon dioxide to form carbon dioxide liquid and/or gas. The method may further comprise removing and/or releasing the carbon dioxide liquid and/or gas from the container. In certain embodiments, the temperature and pressure is adjusted to form carbon dioxide gas. The carbon dioxide gas may then be removed/released from the reaction container.

In certain embodiments, the method comprises providing a composition comprising a mixture of the synthetic phyllosilicate and an aqueous solvent and combining with an organic solvent or a non-organic solvent that is miscible with carbon dioxide to form a mixture of the synthetic phyllosilicate and organic solvent or non-organic solvent that is miscible with carbon dioxide.

In certain embodiments, the method comprises introducing carbon dioxide gas to the reaction container and adjusting the temperature and/or pressure of the reaction container to change the carbon dioxide gas to liquid carbon dioxide. In certain embodiments, the method comprises introducing carbon dioxide liquid to the reaction container.

Thus, the mixture of organic solvent or non-organic solvent that is miscible with carbon dioxide and synthetic phyllosilicate may be combined directly with carbon dioxide gas and/or carbon dioxide liquid and/or supercritical carbon dioxide.

In certain embodiments, the method comprises making the synthetic phyllosilicate.

In certain embodiments, the method comprises adding a functionalization agent to the mixture of the synthetic phyllosilicate and organic solvent or non-organic solvent that is miscible with carbon dioxide prior to combining the mixture of the synthetic phyllosilicate and organic solvent or non-organic solvent that is miscible with carbon dioxide with carbon dioxide. Alternatively or additionally, the functionalization agent may be added to the aqueous solvent or to

the carbon dioxide.

In accordance with a second aspect of the present invention there is provided a synthetic phyllosilicate obtained by and/or obtainable by the method of the first aspect of the present invention, including any embodiment thereof.

In accordance with a third aspect of the present invention there is provided a synthetic phyllosilicate. The synthetic phyllosilicate may, for example, have a BET surface area equal to or greater than about 400 $m^2/g$, a $d_{90}/d_{10}$ equal to or less than about 10, a $d_{50}$ equal to or less than about 600 nm, and/or a shape factor equal to or less than about 50. The synthetic phyllosilicate may, for example, be in accordance with the second aspect of the present invention, including any embodiment thereof.

Certain embodiments of any aspect of the present invention may provide one or more of the following advantages:

- reduce the number of steps to obtain dry and/or functionalized mineral;
- perform complete method in a single container;
- reduce time taken for drying;
- reduce damage to mineral particles caused by drying;
- reduce conglomeration (e.g. stacking) of mineral particles;
- increase surface area of mineral particles;
- obtain minerals with various functional groups;
- obtain mineral particles with narrow particle size distribution (i.e. obtain mineral particles with more uniform particle size);
- production of minerals in various forms (e.g. gel or powder);
- production of minerals that can be redispersed in various mediums (e.g. oil or water).

The details, examples and preferences provided in relation to any particulate one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

**BRIEF DESCRIPTION OF THE FIGURES**

Figure 1 shows a schematic representation of the process described in Example 1.

Figure 2 shows the X-ray diffraction pattern of synthetic talc after classical drying by evaporation (1) and after supercritical drying according to the method of Example 1 (2).

Figure 3 shows a near-infrared spectra of synthetic talc after classical drying by evaporation (1) and after supercritical drying according to the method of Example 1 (2).

Figure 4 shows micrographs obtained by scanning electron microscopy (SEM) of synthetic talc after supercritical drying according to the method of Example 1.

Figure 5 shows a size-distribution histogram analysis of synthetic talc after supercritical drying according to the method of Example 1.

Figure 6 shows solid-state $^{1}H$, $^{29}Si$ and $^{13}C$ nuclear magnetic resonance spectra of synthetic talc funtionalized by TEOS after supercritical drying (TS + TEOS).

Figure 7 shows infrared spectra of synthetic talc after supercritical drying (TS), synthetic talc funtionalized by TEOS after supercritical drying (TS + TEOS) and of TEOS (TEOS).

Figure 8 shows the thermogravimetric analysis of synthetic talc after supercritical drying and synthetic talc after supercritical drying and functionalization with TEOS.

Figure 9 shows the X-ray diffraction pattern of synthetic talc after supercritical drying but without functionalization, after functionalization with TEOS and supercritical drying (Example 2), and after functionalization with BEMT and supercritical drying (Example 3).

Figure 10 shows the infrared spectra of synthetic talc after supercritical drying (TS), synthetic talc functionalized by BEMT (TS + BEMT) and of BEMT (BEMT).

## DETAILED DESCRIPTION

*Method of drying and optionally functionalizing*

The present inventors have surprisingly and advantageously found that synthetic phyllosilicates can be dried using carbon dioxide, for example a liquid carbon dioxide or a supercritical carbon dioxide treatment. This process is advantageously quicker than conventional mineral drying techniques such as evaporation, freeze-drying or atomization. Further, without wishing to be bound by theory, it is thought that drying using supercritical carbon dioxide treatment eliminates capillary pressures caused by surface tension and other physical constraints during drying and thus reduces or eliminates damage to the mineral particles during drying.

There is therefore provided herein a method for drying a synthetic phyllosilicate using carbon dioxide, for example liquid carbon dioxide and/or supercritical carbon dioxide. The method generally comprises replacing an organic solvent or a non-organic solvent that is miscible with carbon dioxide in a composition comprising the synthetic phyllosilicate with carbon dioxide. The temperature and/or pressure may then be adjusted to form liquid carbon dioxide. Alternatively or additionally, the temperature and pressure may then be adjusted above the critical point of carbon dioxide to form supercritical carbon dioxide. The carbon dioxide may then be removed or released as a liquid and/or gas. The temperature and/or pressure may then be adjusted below the critical point of carbon dioxide so the carbon dioxide can be removed or released as a liquid and/or gas, thus leaving a dried product. In particular, the temperature and/or pressure may then be adjusted below the critical point of carbon dioxide so that carbon dioxide can be removed or released as a gas.

In certain aspects, the method comprises:

providing a mixture of the synthetic phyllosilicate and organic solvent or a non-organic solvent that is miscible with carbon dioxide in a reaction container; and
combining the mixture with carbon dioxide.

The mixture may, for example, be directly combined with carbon dioxide gas, carbon dioxide liquid or supercritical carbon dioxide.

Where the mixture is combined with carbon dioxide gas, the method may further comprise adjusting the temperature and/or pressure of the reaction container to form carbon dioxide liquid.

Where the mixture is combined with carbon dioxide gas and/or liquid, the method may further comprise adjusting the temperature and pressure of the reaction container above the critical point of carbon dioxide to form supercritical carbon dioxide.

In certain embodiments, the synthetic phyllosilicate is selected from synthetic talc, synthetic pyrophyllites, synthetic micas, synthetic smectites (e.g. bentonite, montmorillonite, nontronite, beidellite, saponite), synthetic kaolinites, synthetic serpentines, synthetic chlorites and mixtures of one or more thereof. In certain embodiments, the synthetic phyllosilicate is synthetic talc. The present invention may tend to be discussed in terms of synthetic talc. However, the present invention should not be construed as being limited as such.

In certain embodiments, the synthetic phyllosilicate is synthesized by one or more of the methods described in Claverie et al., "Synthetic Talc and Talc-Like Structures: Preparation, Features and Applications", Chem. Eur. J., 2017, 23, DOI: 10.1002/chem.201702763, the contents of which are incorporated herein by reference in their entirety.

As used herein, the term "synthetic talc" means talc that has been synthesized using a man-made synthetic process. In certain embodiments, the synthetic talc particulate is one or more of:

(1) synthetic talc prepared in accordance with WO-A-2008/009800 and US-A-2009/0253569, the entire contents of which are hereby incorporated by reference. More particularly, a talcose composition, comprising synthetic mineral particles which contain silicon, germanium and metal, have a crystalline and lamellar structure, and are of formula $-(Si_xGe_{1-x})_4M_3O_{10}(OH)_2-$, M denoting at least one divalent metal and having the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y (i) representing a real number of the interval [0; 1], such that

$$\sum_{i=1}^{8} y(i) = 1$$

x being a real number of the interval [0; 1], obtainable by a process which comprises subjecting a composition

comprising swelling TOT-TOT (tetrahedron-octahedron-tetrahedron) interlayer particles, as defined below, to an anhydrous thermal treatment which is carried out at a pressure of less than 5 bar for a period and at a treatment temperature, greater than 300°C, with appropriate conditions selected to obtain the crystallinity and stability desired for said synthetic mineral particles containing silicon, germanium and metal that are to be prepared.
The composition comprising swelling TOT-TOT (tetrahedron-octahedron-tetrahedron) interlayer particles, is formed by interlayering between:

at least one non-swelling mineral phase formed by a stack of elementary laminae of the 2/1 phyllogermanosilicate type and having the chemical formula $-(Si_xGe_{1-x})_4M_3O_{10}(OH)_2-$, and

at least one swelling mineral phase formed by a stack of elementary laminae of the 2/1 phyllogermanosilicate type and at least one interfoliar space between two consecutive elementary laminae; said swelling mineral phase having the chemical formula $-(Si_xGe_{1-x})_4M_{3-\varepsilon}O_{10}(OH)_2,(M^{2+})_{\varepsilon'}\cdot H_2O-$, in which M, y(i) and x are as defined above, ε and ε' relate to the cation deficit of the elementary laminae of the swelling phase and to the cations present in the interfoliar space(s), respectively,

said composition being characterized in that an X-ray diffraction analysis of said swelling TOT-TOT interlayer particles yields a diffractogram having the following characteristic diffraction peaks:

a plane (001) located at a distance of the order of 14-15 Å, representing said swelling mineral phase;
planes representing said non-swelling mineral phase: a plane (001) located at a distance of the order of 9.60-10.50 Å; a plane (020) located at 4.50-4.60 Å; a plane (003) located at 3.10-3.20 Å; and a plane (060) located at 1.50-1.55 Å.

The composition comprising swelling TOT-TOT (tetrahedron-octahedron-tetrahedron) interlayer particles may be prepared by a method which comprises subjecting a gel containing silicon, germanium and metal and having the chemical formula $-(Si_xGe_{1-x})_4M_3O_{11}\cdot n'(H_2O)-$ (wherein n' is a positive integer), in the liquid state, to a hydrothermal treatment carried out for a suitable period of time and a temperature of from 150°C to 300°C. The resulting colloidal composition is recovered and subjected to a drying step, optionally followed by a step of mechanical grinding to give a solid composition comprising individualized swelling TOT-TOT interlayer particles.
In certain embodiments, the gel composition containing silicon, germanium and metal is prepared by a co-precipitation reaction between:

a liquid composition comprising at least one saline solution selected from: a sodium metasilicate ($Na_2OSiO_2$) solution and a sodium metagermanate ($Na_2OGeO_2$) solution and having the following molar concentration ratios:

$$\frac{[Na_2OSiO_2]}{[Na_2OSiO_2]+[Na_2OGeO_2]}=x$$

and

$$\frac{[Na_2OGeO_2]}{[Na_2OSiO_2]+[Na_2OGeO_2]}=1-x;$$

and

a solution of metal chloride(s) ($MCl_2$) comprising at least one divalent metal chloride selected from: magnesium chloride ($MgCl_2$), nickel chloride ($NiCl_2$), cobalt chloride ($CoCl_2$), zinc chloride ($ZnCl_2$), copper chloride ($CuCl_2$), manganese chloride ($MnCl_2$), iron chloride ($FeCl_2$), chromium chloride ($CrCl_2$); with a molar concentration ratio for each of said metal chlorides such that:

$$\frac{[\text{divalent metal}_{(i)}]}{[M]_{(total)}} = y(i)$$

in the presence of a hydrochloric acid solution.

(2) synthetic talc prepared in accordance with WO-A-2008/009801 and US-A-2009/0252963, the entire contents of which are hereby incorporated by reference. More particularly, a synthetic talc composition comprising talc particles of the formula $Si_4Mg_3O_{10}(OH)_2$, wherein said composition is characterized in that an X-ray diffraction analysis of said talc particles yields a diffractogram having the following characteristic diffraction peaks: a peak located at 9.40-9.68 A, corresponding to a plane (001); a peak located at 4.50-4.60 Å, corresponding to a plane (020); a peak located at 3.10-3.20 Å, corresponding to a plane (003); a peak located at 1.50-1.55 Å, corresponding to a plane (060-330). In certain embodiments, the diffraction peak corresponding to the plane (001) is located at a distance of the order of 9.40-9.43 Å. In certain embodiments, said talc particles have a particle size less than 500 nm, for example, a particle size of from 20 nm to 100 nm, as determined transmission electron microscopy, or any suitable method which gives substantially the same result. In certain embodiments, the talc particles are present in individualized and pulverulent form. In certain embodiments, the talc particles are present in a form agglomerated with one another and form aggregates.

The synthetic talc composition described under (2) above may be prepared by a process in which a kerolite composition is subjected to an anhydrous thermal treatment carried out at a pressure below 5 bar for a period and at a treatment temperature greater than 200°C, for example, greater than 300°C, with appropriate conditions selected to obtain thermally stable synthetic talc particles of the formula $Si_4Mg_3O_{10}(OH)_2$. In certain embodiments, the anhydrous thermal treatment is carried out at a temperature of from 500°C to 550°C, optionally wherein the treatment time is greater than 5 hours. In certain embodiments, the anhydrous thermal treatment is carried out in ambient air, inside a crucible. In certain embodiments, mechanical grinding of said synthetic talc composition is carried out in order to obtain a pulverulent composition. In certain embodiments, said kerolite composition is prepared from a silicometallic gel of the formula $Si_4Mg_3O_{11}\cdot n'H_2O$, which is subjected to a hydrothermal treatment at saturation water vapour pressure and at a temperature of from 100°C to 400°C, for example, from 100°C to 350°C, or from 150°C to 325°C, or from 200°C to 300°C, or from 100°C to 240°C, for a period of from one day to several months, optionally wherein the kerolite composition is subjected to the anhydrous thermal treatment after it has been dried and ground to obtain a pulverulent composition. In certain embodiments, the silicometallic gel is prepared by co-precipitation according to the reaction:

$$4\,Na_2OSiO_2 + \begin{matrix} 3MgCl_2 \\ 2HCl \\ mH_2O \end{matrix} \longrightarrow [Si_4Mg_3O_{11}, n'H_2O] + 8NaCl + (m - n' + 1)H_2O$$

wherein m, n' and (m-n'+1) are positive integers.

(3) synthetic talc prepared in accordance with WO-A-2008/009799 and US-A-2009/0261294, the entire contents of which are hereby incorporated by reference. More particularly, a talcose composition that comprises synthetic mineral particles containing silicon, germanium and metal of formula $-(Si_xGe_{1-x})_4M_3O_{10}(OH)_2-$in which: M denotes at least one divalent metal and has the formula $Mg_{y(1)}Co_{y(2)}Zn_{y(3)}Cu_{y(4)}Mn_{y(5)}Fe_{y(6)}Ni_{y(7)}Cr_{y(8)}$; each y(i) being a real number of the interval [0; 1], such that

$$\sum_{i=1}^{8} y(i) = 1$$

wherein x is a real number of the interval [0; 1], said composition being characterized in that in an X-ray diffraction analysis of said synthetic mineral particles containing silicon, germanium and metal, a diffractogram having the following characteristic diffraction peaks is obtained: a peak located at a distance of the order of 9.40-9.68 Å, for a

plane (001); a peak located at 4.50-4.75 Å, for a plane (020); a peak located at 3.10-3.20 Å, for a plane (003); a peak located at 1.50-1.55 Å, for a plane (060).

In certain embodiments, the diffraction peak corresponding to plane (001) is located at a distance of the order of 9.55-9.65 Å. In certain embodiments, the synthetic particles containing silicon, germanium and metal have a unimodal and monodisperse particle size distribution of from 10 nm to 10 μm. In certain embodiments, said synthetic particles containing silicon, germanium and metal are present in individualized and pulverulent form. In certain embodiments, said synthetic particles containing silicon, germanium and metal are present in individualized form dispersed in a liquid. In certain embodiments, said synthetic particles containing silicon, germanium and metal are present in a form agglomerated with one another and form aggregates.

In certain embodiments, the talcose composition is prepared by a process comprises subjecting a gel containing silicon, germanium and metal and having the chemical formula $-(Si_xGe_{1-x})_4M_3O_{11}\cdot n'(H_2O)-$ (wherein n' is a positive integer), in the liquid state, to a hydrothermal treatment carried out for a suitable period of time and a temperature of from 300°C to 600°C.

Following said hydrothermal treatment, a colloidal talcose composition may be recovered and subjected to a drying step followed by a mechanical grinding step to give a talcose composition comprising individualized mineral particles containing silicon, germanium and metal.

In certain embodiments, said gel containing silicon, germanium and metal is prepared by a co-precipitation reaction between: a liquid composition comprising at least one saline solution selected from: a sodium metasilicate ($Na_2OSiO_2$) solution and a sodium metagermanate ($Na_2OGeO_2$) solution; and having the following molar concentration ratios:

$$\frac{[Na_2OSiO_2]}{[Na_2OSiO_2]+[Na_2OGeO_2]} = x$$

and

$$\frac{[Na_2OGeO_2]}{[Na_2OSiO_2]+[Na_2OGeO_2]} = 1 - x;$$

and a solution of metal chloride(s) ($MCl_2$) comprising at least one divalent metal chloride selected from: magnesium chloride ($MgCl_2$), nickel chloride ($NiCl_2$), cobalt chloride ($COCl_2$), zinc chloride ($ZnCl_2$), copper chloride ($CuCl_2$), manganese chloride ($MnCl_2$), iron chloride ($FeCl_2$), chromium chloride ($CrCl_2$); with a molar concentration ratio for each of said metal chlorides such that:

$$\frac{[\text{divalent metal}_{(i)}]}{[M]_{(total)}} = y(i)$$

in the presence of a hydrochloric acid solution.

In certain embodiments, the hydrothermal treatment of said gel containing silicon, germanium and metal is carried out by means of an autoclave. In certain embodiments, the hydrothermal treatment is carried out with a liquefied gel containing silicon, germanium and metal having a liquid/solid ratio of the order of 0.83; the amount of liquid being expressed in $cm^3$ and the amount of solid in grams. In certain embodiments, the hydrothermal treatment is carried out at a temperature of the order of 300°C. In certain embodiments, the hydrothermal treatment is carried out at a temperature of the order of 400°C. In certain embodiments, the hydrothermal treatment is carried out at a temperature of the order of from 500°C to 600°C. In certain embodiments, the hydrothermal treatment is carried out at a controlled pressure of the order of 16 bar. In certain embodiments, the hydrothermal treatment is carried out with stirring. In certain embodiments, in order to prepare said gel containing silicon, germanium and metal of formula $(Si_xGe_{1-x})_4M_3O_{11}\cdot n'H_2O$, the following steps are carried out in succession:

an acidic composition of metal chloride is prepared by dissolving, in one volume of water, an appropriate amount of a composition of hygroscopic crystals of at least one metal chloride selected from: magnesium chloride ($MgCl_2$), nickel chloride ($NiCl_2$), cobalt chloride ($COCl_2$), zinc chloride ($ZnCl_2$), copper chloride ($CuCl_2$), man-

ganese chloride ($MnCl_2$), iron chloride ($FeCl_2$), chromium chloride ($CrCl_2$);

then hydrochloric acid (HCl) is added thereto;

a liquid composition is prepared by dissolving, in an appropriate volume of water, an amount of at least one salt selected from: sodium metasilicate and sodium metagermanate;

the two aqueous compositions are mixed in proportions chosen to cause the formation of a co-precipitation gel;

the amounts of the various reagents that are employed being chosen so that the $Na^+$ and $Cl^-$ ions are present in an equimolar amount following the co-precipitation reaction;

optionally wherein before the hydrothermal treatment of said gel containing silicon, germanium and metal is carried out, the gel is washed with distilled water in order to remove therefrom the sodium chloride formed during the co-precipitation reaction.

(4) synthetic talc prepared in accordance with WO-A-2012/0852391 and, the entire contents of which are hereby incorporated by reference. More particularly, a composition comprising synthetic talc mineral particles, obtainable by a process comprising: preparing a hydrogel precursor of said synthetic mineral particles, subjecting said hydrogel to a hydrothermal treatment, characterized in that performing at least one of said hydrothermal treatment step by adding at least one carboxylate salt in the treatment medium, said carboxylate salt having the formula R-COOM', wherein: M' is a metal selected from the group consisting of Na and K, and R is selected from H and alkyl groups having less than 10 carbon atoms. In certain embodiments, R is chosen from the group consisting of H, $CH_3$-, and -$CH_3$-$CH_2$-$CH_2$-. The temperature may be between 150°C and 600°C, for example, between 200°C and 400°C. In certain embodiments, said precursor hydrogel is a gel containing silicon/germanium and having a formula $(Si_xGe_{1-x})_4M_3O_{11}\cdot n'H_2O$: M is at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$; each y(i) being a real number of the interval [0; 1], such that

$$\sum_{i=1}^{8} y(i) = 1$$

wherein x is a real number of the interval [0; 1], n' referring to a number of molecule(s) of bound water to said gel containing silicon/germanium.
In certain embodiments, the salt(s) of the formula R-COOM' is (are) added to said treatment medium such that a molar ratio of said R-COOM' to hydrogel is between 0.4 and 100. In certain embodiments, the molar ratio of R-COOM' to Si is between 0.1 and 25, based on silicon. In certain embodiments, the salt(s) of the formula R-COOM' are added to the processing medium at the beginning of the hydro thermal treatment. In certain embodiments, an amount of the salt(s) of the formula R-COOM' is added to the treatment medium so as to adjust its pH to a value between 8 and 12. In certain embodiments, the salt(s) of the formula R-COOM' are added to the treatment medium so that the concentration of the salt(s) of the formula R-COOM' in the treatment medium is between 0.2 mol/L and 10 mol/L.
In certain embodiments, the said hydrothermal treatment achieves saturation vapor pressure.
In certain embodiments, the treatment comprises lyophilization.
In certain embodiments, the hydrothermal treatment is followed by a drying step between 300°C and 600°C.
In certain embodiments, said gel is prepared by a co-precipitation reaction according to the following reaction:

$$\begin{matrix}(Na_2OSiO_2)_x \\ (Na_2OGeO_2)_{1-x}\end{matrix} + 2HCl + mH_2O + 3\begin{pmatrix} y_{(1)}(MgCl_2) + y_{(2)}(CoCl_2) + y_{(3)}(ZnCl_2) \\ + y_{(4)}(CuCl_2) + y_{(5)}(MnCl_2) + y_{(6)}(FeCl_2) \\ + y_{(7)}(NiCl_2) + y_{(8)}(CrCl_2) \end{pmatrix}$$

$$\longrightarrow [(Si_xGe_{1-x})_4M_3O_{11}, n'H_2O] + 8NaCl + (m-n'+1)H_2O$$

wherein m, n, and (m-n '+ l) are positive integers.

In certain embodiments, the gel has the formula $Si_4M_3O_{11}\cdot n'H_2O$.

In certain embodiments, the synthetic mineral particles comprise at least one non-swelling component formed of a stack of elementary layers of phyllosilicate type 2/1 having the chemical formula $(Si_xGe_{1-x})_4M_3O_{10}(OH)_2$.

In certain embodiments, said composition is characterized in that in an X-ray diffraction analysis of said synthetic mineral particles containing silicon, germanium and metal, a diffractogram having the following characteristic diffraction peaks is obtained: a plane (001) located at a distance of between 9.50 Å and 10.25 Å; a plane (020) located at a distance of between 4.50 Å and 4.61 Å; a plane (003) located at a distance of between 3.10 Å and 3.20 Å; and a plane (060) located at a distance of between 1.50 Å and 1.55 Å.

(5) A synthetic talc formed by the precipitation reaction of water soluble alkali metal silicate, e.g., sodium silicate, and a water soluble magnesium salt such as, for example, magnesium chloride, magnesium nitrate or magnesium sulfate.

(6) A synthetic talc prepared in accordance with international patent application PCT/FR2012/051594, the entire contents of which are hereby incorporated by reference. More particularly, a synthetic talc composition comprising synthetic mineral particles and is characterized in that an X-ray diffraction analysis of said talc particles yields a diffractogram having the following characteristic diffraction peaks: a peak located at 9.40-9.90 A, corresponding to a plane (001); a peak located at 4.60-4.80 A, corresponding to a plane (002); a peak located at 3.10-3.20 Å, corresponding to a plane (003); a peak located at 1.51-1.53 Å, corresponding to a plane (060), and wherein the intensity of a diffraction peak characteristic of a plane (002) is greater than the intensity of the corresponding signal of a plane (020), located at 4.40-4.60 A, and wherein the ratio between the intensity of a diffraction peak characteristic of a plane (001) and the intensity of a diffraction peak characteristic of a plane (003) is comprised between 0.60 and 1.50.

In certain embodiments, the synthetic mineral particles of said talc composition are phyllosilicated mineral particles displaying at least one non-swelling phase formed by a stack of elementary laminae of the 2/1 phyllogermanosilicate type and having the chemical formula $(Si_xGe_{1-x})_4M_3O_{10}(OH)_2$, and wherein x represents a real number of the interval [0; 1], and M denotes at least one divalent metal and has the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y(i) representing a real number of the interval [0; 1], such that

$$\sum_{i=1}^{8} y(i) = 1.$$

In certain embodiments, said composition is characterised in that in near-infrared spectroscopy, it displays a vibration band located between 5,000 $cm^{-1}$ and 5,500 $cm^{-1}$ corresponding to the presence of water bonded at the edges of the laminae.

The synthetic talc composition described under (6) above may be obtainable by a process comprising: preparing a hydrogel precursor of said synthetic mineral particles, by co-precipitation of at least one silicon-containing compound and one compound comprising at least one metallic element, and wherein said co-precipitation reaction is carried out in the presence of at least one carboxylate salt having the formula $R_2$-COOM', wherein: M' is a metal selected from the group consisting of Na and K, and $R_2$ is selected from H and alkyl groups having less than 5 carbon atoms.

In certain embodiments, said compound comprising at least one metallic element is a dicarboxylate salt having the formula $M(R_1\text{-}COO)_2$, wherein: $R_1$ is selected from H and alkyl groups having less than 5 carbon atoms, and M denotes at least one divalent metal and has the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y(i) representing a real number of the interval [0; 1], such that

$$\sum_{i=1}^{8} y(i) = 1.$$

In certain embodiments, said hydrogel is subjected to a hydrothermal treatment to obtain said synthetic mineral particles.

In certain embodiments, the co-precipitation reaction mixture of said hydrogel precursor is directly subjected to a hydrothermal treatment.

In certain embodiments, $R_1$ and $R_2$ are selected from the group consisting of $CH_3$-, $CH_3$-$CH_2$- and $CH_3$-$CH_2$-$CH_2$-, and $R_1$ and $R_2$ are optionally identical.

In certain embodiments, the silicon-containing compound is sodium metasilicate.

In certain embodiments, said synthetic mineral particles are silicate and/or phyllosilicated mineral particles.

In certain embodiments, said precursor hydrogel is a gel containing silicon/germanium and having a formula $(Si_xGe_{1-x})_4M_3O_{11}\cdot n'H_2O$, wherein: x is a real number of the interval [0; 1], and n' refers to a number of molecule(s) of bound water to said gel containing silicon/germanium.

In certain embodiments, the salt(s) of the formula $R_2$-COOM' is (are) added to said treatment medium such that a molar ratio of $R_2$-COOM' to Si is between 0.1 and 9.

In certain embodiments, said hydrothermal treatment is carried out at a temperature between 150°C and 400°C, or between 150°C and 370°C, or between 200°C and 350°C and/or it is carried out at a pressure between 5 and 200 bar. In some embodiments, said hydrothermal treatment may be applied for 30 minutes to 30 days, such as for 1 hour to 15 days, or for 2 hours to 24 hours.

In certain embodiments, the synthetic phyllosilicate is synthesized and then optionally functionalized and dried by a method described herein in one continuous process. Thus, in certain embodiments, the method of drying further comprises making the synthetic phyllosilicate. The making of the synthetic phyllosilicate occurs prior to drying of the synthetic phyllosilicate, i.e. prior to providing a mixture of the synthetic phyllosilicate and an organic solvent in a reaction container. Alternatively, the synthetic phyllosilicate may be obtained from a manufacturer prior to drying, i.e. prior to providing a mixture of the synthetic phyllosilicate and an organic solvent in a reaction container.

The synthetic phyllosilicate may, for example, be synthesized, stored and/or provided in a mixture with an organic solvent. Alternatively, the synthetic phyllosilicate may be synthesized, stored and/or provided in a mixture with an aqueous solvent. Thus, in certain embodiments the method may comprise providing a composition comprising a mixture of the synthetic phyllosilicate and an aqueous solvent and replacing the aqueous solvent with an organic solvent to make a mixture of the synthetic phyllosilicate in an organic solvent. At least about 90 vol% of the aqueous solvent may be replaced. For example, at least about 92 vol% or at least about 94 vol% or at least about 95 vol% or at least about 96 vol% or at least about 98 vol% or at least about 99 vol% of the aqueous solvent may be replaced. For example, all (100 vol%) of the aqueous solvent may be replaced. The aqueous solvent may, for example, be replaced by combining, for example by mixing, the mixture of the synthetic phyllosilicate and an aqueous solvent with an organic solvent. A continuous flow of organic solvent may be supplied and removed from the reaction container, for example until the desired vol% of aqueous solvent has been removed. This forms a mixture of the synthetic phyllosilicate and an organic solvent. The composition comprising a mixture of the synthetic phyllosilicate and an aqueous and/or organic solvent may, for example, be a homogenous composition. The composition comprising a mixture of the synthetic phyllosilicate in an aqueous or organic solvent may, for example, be a suspension such as a colloidal suspension.

The aqueous solvent may be removed after the mixture of the synthetic phyllosilicate and the aqueous solvent is combined with the organic solvent. In other words, the aqueous solvent may be separated from the mixture of the synthetic phyllosilicate and the organic solvent. Therefore, the mixture of the synthetic phyllosilicate and organic solvent may not comprise any aqueous solvent. For example, where the aqueous and organic solvent are not miscible, the aqueous solvent may be removed using a separating column or funnel. For example, a continuous flow of organic solvent may be provided into and out of the reaction container until the desired vol% of aqueous solvent is removed. The aqueous solvent may be removed in a mixture with the organic solvent.

The organic solvent may, for example, be any organic solvent that is miscible with carbon dioxide. This means that it must be possible to mix any proportions of the organic solvent and carbon dioxide to form a homogenous mixture. The organic solvent may, for example, be an alcohol. For example, the organic solvent may be methanol, ethanol, propanol, butanol, pentanol, hexanol, isopropanol or a combination of one or more thereof. In certain embodiments, the organic solvent is ethanol. The organic solvent may, for example, be a ketone. For example, the organic solvent may be propanone (acetone), butanone, pentanone, hexanone or a combination of one or more thereof. In certain embodiments, the organic solvent is acetone.

A non-organic solvent that is miscible with carbon dioxide (can be mixed in any proportion to form a homogenous mixture) can be used instead of the organic solvent in all aspects and embodiments described herein. The non-organic solvent may, for example, be an ionic liquid.

The aqueous solvent may, for example, not be miscible with the organic solvent. The aqueous solvent may, for example, be water (100% water) or may be a mixture of water with another component such as an alcohol. The alcohol may, for example, be present in an aqueous solvent in an amount of less than about 50 vol%, for example from about 3 vol% to about 30 vol%, for example from about 5 vol% to about 20 vol%. Where at least about 90 vol% of the aqueous solvent is replaced by the organic solvent, this means that at least about 90 vol% of the non-organic components of the aqueous solvent are replaced.

The mixture of the synthetic phyllosilicate and organic solvent is then combined with carbon dioxide to remove the organic solvent. The carbon dioxide may then be removed to leave a dried product. For example, the mixture of the

synthetic phyllosilicate and organic solvent may then be combined with supercritical carbon dioxide to remove the organic solvent. The supercritical carbon dioxide may then be converted to carbon dioxide gas, which may be released to leave a dried product.

The carbon dioxide may replace at least about 90 vol% of the organic solvent. For example, the carbon dioxide may replace at least about 91 vol% or at least about 92 vol% or at least about 93 vol% or at least about 94 vol% or at least about 95 vol% or at least about 96 vol% or at least about 97 vol% or at least about 98 vol% or at least about 99 vol% of the organic solvent. The carbon dioxide may, for example replace up to about 100 vol% of the organic solvent. The carbon dioxide may replace the organic solvent by providing a continuous flow of carbon dioxide into and out of the reaction container, for example until a desired vol% or organic solvent has been removed. The organic solvent may be removed from the reaction container in a mixture with the carbon dioxide. The flow of carbon dioxide into the reaction container may then be stopped such that the carbon dioxide is removed and/or released from the reaction container.

In certain embodiments, the mixture of the synthetic phyllosilicate and organic solvent is first combined with liquid carbon dioxide and then the temperature and pressure conditions are adjusted above the critical point of carbon dioxide to form supercritical carbon dioxide. The temperature and pressure may then be adjusted below the critical point of carbon dioxide, for example to form a carbon dioxide gas. The carbon dioxide gas may then be released, thus leaving a dried product. The critical point of carbon dioxide refers to the end point of the phase equilibrium curve where phase boundaries disappear, in particular where phase boundaries between carbon dioxide liquid and carbon dioxide gas disappear. The critical temperature of carbon dioxide is 304.25 K, 31°C, 87.98°F. The critical pressure of carbon dioxide is 72.9 atm, 7.38 MPa, 1,071 psi.

In certain embodiments, the mixture of the synthetic phyllosilicate and organic solvent is directly combined with supercritical carbon dioxide.

The temperature and pressure may be such that the carbon dioxide is liquid carbon dioxide for a suitable amount of time to allow these conditions to stabilize or until the organic solvent is removed. The temperature and pressure may be above the critical point of carbon dioxide for a suitable amount of time to allow these conditions to stabilize before the temperature and pressure are adjusted again to be below the critical point of carbon dioxide. The temperature and pressure may be above the critical point of carbon dioxide until a dry product is obtained. For example, the temperature and pressure conditions may be maintained for at least about 10 minutes. For example, the temperature and pressure conditions may be maintained for at least about 15 minutes or at least about 20 minutes or at least about 25 minutes or at least about 30 minutes or at least about 35 minutes or at least about 40 minutes or at least about 45 minutes or at least about 50 minutes or at least about 55 minutes or at least about 60 minutes. For example, the temperature and pressure conditions may be maintained for up to about 120 minutes. For example, the temperature and pressure conditions may be maintained for up to about 115 minutes or up to about 110 minutes or up to about 105 minutes or up to about 100 minutes or up to about 95 minutes or up to about 90 minutes or up to about 85 minutes or up to about 80 minutes or up to about 75 minutes or up to about 70 minutes or up to about 65 minutes.

The final temperature (e.g. the final temperature above the critical temperature of carbon dioxide) may, for example, be from about 20°C to about 100°C. The final temperature refers to the maximum temperature in the reaction container that is reached before the conditions are adjusted and reduced to remove the dry product (e.g. before the conditions are adjusted and reduced to below the critical point of carbon dioxide). For example, the final temperature above the critical temperature of carbon dioxide may, for example, be from about 22°C to about 100°C or from about 25°C to about 95°C or from about 30°C to about 90°C or from about 32°C to about 90°C or from about 32°C to about 80°C or from about 32°C to about 70°C or from about 32°C to about 60°C.

The final pressure (e.g. the final pressure above the critical pressure of carbon dioxide) may, for example, be from about 5.5 MPa to about 15 MPa. The final pressure (e.g. the final pressure above the critical pressure of carbon dioxide) refers to the maximum pressure in the reaction container that is reached before the conditions are adjusted and reduced to remove the dry product (e.g. before the conditions are adjusted and reduced to below the critical point of carbon dioxide). For example, the final pressure above the critical pressure of carbon dioxide may be from about 5.5 MPa to about 15 MPa or from about 5.72 MPa to about 15 MPa or from about 6 MPa to about 15 MPa or from about 7 MPa to about 15 MPa or from about 7.4 MPa to about 15 MPa or from about 7.4 MPa to about 14 MPa or from about 7.4 MPa to about 13 MPa or from about 7.4 MPa to about 12 MPa or from about 7.4 MPa to about 11 MPa or from about 7.4 MPa to about 10 MPa.

The temperature and pressure may be adjusted to be below the critical point of carbon dioxide relatively slowly to avoid condensation of the carbon dioxide in the nanoporosity. This may, for example, take at least about 2 minutes. For example, this may take at least about 5 minutes or at least about 10 minutes or at least about 15 minutes or at least about 20 minutes or at least about 25 minutes or at least about 30 minutes For example, this may take up to about 60 minutes or up to about 55 minutes or up to about 50 minutes or up to about 45 minutes or up to about 40 minutes or up to about 35 minutes or up to about 30 minutes.

The final temperature and pressure in the process (e.g. the final temperature and pressure below the critical temperature of carbon dioxide) may, for example, be standard temperature and pressure (STP) as defined by IUPAC

(0°C and 100 kPa). The final temperature and pressure in the process (e.g. the final temperature and pressure below the critical temperature of carbon dioxide) refers to the minimum temperature and pressure in the reaction container that is reached before the dried product is removed from the reaction container. The final temperature may, for example, be from about 0°C to about 30°C, for example from about 15°C to about 30°C or from about 20°C to about 30°C. The final pressure may, for example, be from about 0.1 MPa to about 7 MPa or from about 0.1 MPa to about 6 MPa or from about 0.1 MPa to about 5 MPa or from about 0.1 MPa to about 4 MPa or from about 0.1 MPa to about 3 MPa or from about 0.1 MPa to about 2 MPa.

In certain embodiments, the mixture of the synthetic phyllosilicate and organic solvent is first combined with carbon dioxide gas and the temperature and/or pressure is adjusted in order to change the carbon dioxide gas to liquid carbon dioxide. This may comprise introducing carbon dioxide gas to the reaction container and adjusting the pressure and/or temperature of the reaction container to change the carbon dioxide gas to carbon dioxide liquid. The temperature used to form liquid carbon dioxide may, for example, be from about 0°C to about 30°C. For example, the temperature used to form liquid carbon dioxide may range from about 0°C to about 25°C or from about 5°C to about 25°C or from about 10°C to about 25°C or from about 15°C to about 25°C or from about 10°C to about 20°C or from about 15°C to about 20°C. The pressure used to form liquid carbon dioxide may, for example, be from about 1 MPa to about 8 MPa.

For example, the pressure used to form liquid carbon dioxide may be from about 2 MPa to about 7 MPa or from about 3 MPa to about 6 MPa or from about 4 MPa to about 6 MPa or from about 5 MPa to about 6 MPa.

In certain embodiments, the mixture of the synthetic phyllosilicate and organic solvent is directly combined with liquid carbon dioxide.

The liquid carbon dioxide is exchanged with the organic solvent due to diffusion phenomena. The synthetic phyllosilicate and any optional functionalization agent are preserved. The organic solvent may be removed by solubilisation in the carbon dioxide followed by extraction of the carbon dioxide.

In certain embodiments, the synthetic phyllosilicate is functionalized before drying. This means that the surface of the synthetic phyllosilicate is modified to fix a functionalization agent thereto. The functionalization agent imparts new functions, features, capabilities or properties to the synthetic phyllosilicate.

In certain embodiments, the functionalization agent is added to the mixture of the synthetic phyllosilicate and organic solvent prior to drying. In certain embodiments, the functionalization agent is added to the mixture of the synthetic phyllosilicate and organic solvent prior to combining the mixture with liquid carbon dioxide. The functionalization agent may be mixed into the mixture of the synthetic phyllosilicate and organic solvent, for example by stirring. In certain embodiments, the functionalization agent is added to the organic solvent before the organic solvent is combined with the synthetic phyllosilicate in order to form the mixture of synthetic phyllosilicate and organic solvent. For example, in a step whereby a mixture of the synthetic phyllosilicate and an aqueous solvent is combined with an organic solvent in order to form a mixture of the synthetic phyllosilicate and organic solvent, the organic solvent may comprise the functionalization agent. In embodiments wherein aqueous solvent is removed from the reaction container, the functionalization agent remains in the mixture with the synthetic phyllosilicate and organic solvent.

Alternatively or additionally, the functionalization agent may be added to any mixture of synthetic phyllosilicate and aqueous solvent prior to forming a mixture of the synthetic phyllosilicate and organic solvent. The functionalization agent may be mixed into the mixture of the synthetic phyllosilicate and aqueous solvent, for example, by stirring. In certain embodiments, the functionalization agent is added to the aqueous solvent before the aqueous solvent is combined with the synthetic phyllosilicate in order to form the mixture of synthetic phyllosilicate and aqueous solvent. In embodiments wherein aqueous solvent is removed from the reaction container, the functionalization agent remains in the mixture with the synthetic phyllosilicate and organic solvent.

Alternatively or additionally, the functionalization agent may be added to the carbon dioxide. In certain embodiments, the functionalization agent is added to the carbon dioxide before the carbon dioxide is combined with the synthetic phyllosilicate.

The functionalization agent may, for example, be contacted with the synthetic phyllosilicate for at least about 1 minute. For example, the functionalization may be contacted with the synthetic phyllosilicate for at least about 5 minutes or at least about 10 minutes or at least about 15 minutes or at least about 20 minutes or at least about 25 minutes or at least about 30 minutes. The functionalization agent may, for example, be contacted with the synthetic phyllosilicate for up to about 120 minutes or up to about 110 minutes or up to about 100 minutes or up to about 90 minutes or up to about 80 minutes or up to about 70 minutes or up to about 60 minutes.

The functionalization agent may, for example, be any functionalization agent that is miscible or soluble in the organic solvent. The functionalization agent may be any functionalization agent that can interact (physically or chemically) with the synthetic phyllosilicate. The functionalization agent may, for example, be an organic functionalization agent, an inorganic functionalization agent, a hydrophobic functionalization agent, a hydrophilic functionalization agent, an amphiphilic functionalization agent and/or a charged functionalization agent.

The functionalization agent may, for example, be a trioxoysilane, for example a trialkoxysilane such as triethoxysilane or triethyoxy(octyl)silane. The functionalization agent may, for example, be a tetraorthosilicate, for example a

tetraalkyl orthosilicate such as tetraethyl orthosilicate. The functionalization agent may, for example, be a triazine, for example bisethylhexyloxyphenol methoxyphenyl triazine. The functionalization agent may, for example, be a metal salt such as a silver salt. The functionalization agent may, for example, be a metal. The functionalization agent may, for example, be an oxide. The functionalization agent may, for example, be a phosphide. The functionalization agent may, for example, be a sulphide. The functionalization agent may, for example, be an anti-UV functionalization agent.

*Synthetic Phyllosilicates*

The present inventors have surprisingly found that the synthetic phyllosilicates made by the methods of drying and optional functionalization described herein advantageously have a higher BET surface area than synthetic phyllosilicates dried in a conventional manner (e.g. evapouration, freeze drying or atomization). There is therefore provided herein a synthetic phyllosilicate. The synthetic phyllosilicate may, for example, be obtained by and/or obtainable by the method of drying and optional functionalization as described herein.

In certain embodiments, the synthetic phyllosilicate is a dry synthetic phyllosilicate. The term "dry" means that the synthetic phyllosilicate comprises equal to or less than about 5 wt% moisture, for example equal to or less than about 4 wt% or equal to or less than about 3 wt%, for example equal to or less than about 2 wt%, for example equal to or less than about 1 wt% moisture. This may be measured by heating the synthetic phyllosilicate and measuring the different in weight before and after heating. In certain embodiments, the synthetic phyllosilicate is in the form of a powder or gel.

In certain embodiments, the synthetic phyllosilicate has a BET surface area equal to or greater than about 400 $m^2/g$. For example, the synthetic phyllosilicate may have a BET surface area equal to or greater than about 450 $m^2/g$ or equal to or greater than about 500 $m^2/g$ or equal to or greater than about 550 $m^2/g$ or equal to or greater than about 600 $m^2/g$ or equal to or greater than about 650 $m^2/g$ or equal to or greater than about 700 $m^2/g$ or equal to or greater than about 750 $m^2/g$ or equal to or greater than about 800 $m^2/g$. The synthetic phyllosilicate may or may not be a functionalized synthetic phyllosilicate.

In certain embodiments, the synthetic phyllosilicate has a BET surface area up to about 1500 $m^2/g$. For example, the synthetic phyllosilicate may have a BET surface area up to about 1400 $m^2/g$ or up to about 1300 $m^2/g$ or up to about 1200 $m^2/g$ or up to about 1100 $m^2/g$ or up to about 1000 $m^2/g$. The synthetic phyllosilicate may or may not be a functionalized synthetic phyllosilicate.

Where the synthetic phyllosilicate is a functionalized synthetic phyllosilicate, it may, for example, have a BET surface area equal to or greater than about 700 $m^2/g$. For example, the functionalized synthetic phyllosilicate may have a BET surface area equal to or greater than about 750 $m^2/g$ or equal to or greater than about 800 $m^2/g$. The functionalized synthetic phyllosilicate may, for example, have a BET surface area up to about 1500 $m^2/g$ or up to about 1400 $m^2/g$ or up to about 1300 $m^2/g$ or up to about 1200 $m^2/g$ or up to about 1100 $m^2/g$ or up to about 1000 $m^2/g$.

BET surface area refers to the area of the surface of the particles of the talc particulate with respect to unit mass, determined according to the BET method by the quantity of nitrogen adsorbed on the surface of said particles so to as to form a monomolecular layer completely covering said surface (measurement according to the BET method, AFNOR standard X11-621 and 622 or ISO 9277). In certain embodiments, specific surface area is determined in accordance with ISO 9277, or any method equivalent thereto.

In certain embodiments, the synthetic phyllosilicate has a $d_{90}/d_{10}$ equal to or less than about 10. For example, the synthetic phyllosilicate may have a $d_{90}/d_{10}$ equal to or less than about 9 or equal to or less than about 8 or equal to or less than about 7 or equal to or less than about 6 or equal to or less than about 5. For example, the synthetic phyllosilicate may have a $d_{90}/d_{10}$ equal to or greater than about 1 or equal to or greater than about 2 or equal to or greater than about 3.

In certain embodiments, the synthetic phyllosilicate has a $d_{50}$ equal to or less than about 600 nm. For example, the synthetic phyllosilicate may have a d50 equal to or less than about 550 nm or equal to or less than about 500 nm or equal to or less than about 450 nm or equal to or less than about 400 nm. For example, the synthetic phyllosilicate may have a d50 equal to or greater than about 50 nm or equal to or greater than about 100 nm or equal to or greater than about 150 nm or equal to or greater than about 200 nm.

Photon correlation spectroscopy (PCS) may be used for particle size measurements. This technique is based on the analysis of scattered light fluctuations caused by the Brownian motion of particles, its principle consists in analyzing the fluctuation of a coherent laser light scattered by particles suspended in a liquid as a function of time and at a given angle. Analyses may be performed using a Cordouan Technology VASCO-2 particle size analyzer. The synthetic mineral may be dispersed in water and the sample diluted to 0.01 wt% to avoid concentration effect. In order to have statistical information on size dispersion of the sample, the NanoQTM software of VASCO may be operated in the multi-acquisition mode with each correlogram acquisition processed by the Padé-Laplace inversion algorithm. All samples were measured twenty times.

In certain embodiments, the synthetic phyllosilicate has an aspect ratio equal to or less than about 50. For example, the synthetic phyllosilicate may have an aspect ratio equal to or less than about 45 or equal to or less than

about 40 or equal to or less than about 35 or equal to or less than about 30. For example, the synthetic phyllosilicate may have an aspect ratio equal to or greater than about 5 or equal to or greater than about 10 or equal to or greater than about 15 or equal to or greater than about 20.

The aspect ratio of the synthetic phyllosilicate may be measured by viewing SEM or TEM images of the particles and measuring the length and thickness of the particles. Aspect ratio is calculated as length/thickness. At least twenty particles are measured and the average aspect ratio calculated to give the aspect ratio of the synthetic phyllosilicate.

## EXAMPLES

### Example 1

Figure 1 shows a schematic representation of the process described in Example 1.

Approximately 10 millilitres (mL) of synthetic talc gel (10%wt dried extract) was poured into a cylindrical porous sintered container (with a diameter of 1.3 centimetres (cm) and a height of 5.7 cm), which was placed into a reactor (with a diameter of 3.4 cm and a height of 9.8 cm). The gel was washed using ethanol for about 5 minutes by injection of ethanol. This step replaced water (contained into the gel) with ethanol, which is miscible in $CO_2$ and an alcohol-based gel of phyllosilicate was formed. Then, $CO_2$ was injected. The system was pressurized at room temperature with liquid $CO_2$ (temperature = 18°C and pressure > 55 bar (5.5 MPa). The system was then warmed (temperature = 60°C and pressure = 100 bar (10 MPa)) to exceed the critical temperature and pressure of $CO_2$ ($T_c$ = 31 °C and $p_c$ = 73.8 bar (7.38 MPa)). $CO_2$ was allowed to flow through the system in these conditions for 1 hour. The system was then slowly depressurized in isothermal conditions and cooled at room pressure to avoid condensation of the $CO_2$ in the nanoporosity. The total time to complete these steps was approximately 2 hours.

Figure 2 shows the X-ray diffraction pattern of synthetic talc after classical drying by evaporation (1) and after supercritical drying according to the method of Example 1 (2). This shows that the structure of the dried material is the same after evaporation and after supercritical drying.

Figure 3 shows a near-infrared spectra of synthetic talc after classical drying by evaporation (1) and after supercritical drying according to the method of Example 1 (2). This shows that the structure of the dried material is the same after evaporation and after supercritical drying.

Figure 4 shows scanning electron micrograph (SEM) images of synthetic talc after supercritical drying according to the method of Example 1. This shows the small size of the particles and their expanded character.

Figure 5 shows a size-distribution histogram analysis of synthetic talc after supercritical drying according to the method of Example 1. This shows the small size of the particles and that the agglomeration is limited since there is no observation of micrometric aggregates usually observed after drying by evaporation.

### Example 2

A talc functionalized with Tetraethyl Orthosilicate (TEOS) was prepared in accordance with the method described in Example 1. Preparation of this functionalized aerogel involved mixing synthetic talc gel with ethanol and TEOS (1 mol of talc for 5 mol of TEOS) in the amount of 5 g of synthetic talc gel, 1.4 g of TEOS and 100 mL of ethanol. This mixture was then centrifuged and the lower part of the centrifugation (containing talc-TEOS and ethanol) was placed in the reactor. Then, $CO_2$ was injected, and the protocol described in Example 1 was followed.

Figure 6 shows solid-state $^{1}H$, $^{29}Si$ and $^{13}C$ nuclear magnetic resonance spectra of synthetic talc funtionalized by TEOS after supercritical drying (TS + TEOS. This demonstrates that the material structure is the same and the TEOS is present in the final product (adsorbed on the synthetic talc).

Figure 9 shows the X-ray diffraction pattern of synthetic talc after a supercritical drying without functionalization (1) and after supercritical drying with functionalization by TEOS (2). This shows deagglomeration or exfoliation, thus attesting to the functionalization.

Figure 7 shows infrared spectra of synthetic talc after supercritical drying (TS), synthetic talc funtionalized by TEOS after supercritical drying (TS + TEOS) and of TEOS (TEOS). This shows that the functionalization was successful. Graphs (A) to (C) show NMR spectra, whereas graph (D) shows infrared spectra.

Figure 8 shows the thermogravimetric analysis of a synthetic talc after supercritical drying and synthetic talc after supercritical drying and functionalization with TEOS.

The BET surface area of the products made by Examples 1 and 2 was also determined. The BET surface are of synthetic talc after evaporation was 150 $m^2$/g. The BET surface area of synthetic talc after supercritical drying (Example 1) was approximately 400 $m^2$/g. The BET surface area of synthetic talc after functionalization with TEOS and supercritical drying (Example 2) was 700 approximately $m^2$/g.

Example 3

A talc functionalized with Bisethylhexyloxyphenol Methoxyphenyl Triazine (BEMT) was prepared according to the same method as Example 2 in the amount of 5 g of synthetic talc gel, 4.1 g of BEMT and 100 mL of ethanol (1 mol of talc for 5 mol of BEMT).

Figure 9 shows the X-ray diffraction pattern of synthetic talc after supercritical drying but without functionalization (Example 1), after functionalization with TEOS and supercritical drying (Example 2) and after functionalization with BEMT and supercritical drying (Example 3). This shows deagglomeration or exfoliation, thus attesting to the functionalization.

Figure 10 shows the infrared spectra of synthetic talc after supercritical drying (TS), synthetic talc functionalized by BEMT (TS + BEMT) and of BEMT (BEMT). This shows that the functionalization was successful.

The foregoing broadly describes certain embodiments of the present invention without limitation. Variations and modifications as will be readily apparent to those skilled in the art are intended to be within the scope of the present invention as defined in and by the appended claims.

Comparative Example

Talc was synthesized (before the step of drying) in water and in a mixture of water and carbon dioxide in supercritical conditions. The synthesis of talc in supercritical water was successful. However, the synthesis in a mixture of water and carbon dioxide was not successful since a mixture of carbonates, acetates and an amorphous phase was obtained.

The following numbered paragraphs define particular embodiments of the present invention.

1.A method for drying a synthetic phyllosilicate, the method comprising:

providing a mixture of the synthetic phyllosilicate and an organic solvent or a non-organic solvent that is miscible with carbon dioxide in a reaction container; and
combining the mixture with carbon dioxide.

2. The method of paragraph 1, wherein the method comprises combining the mixture with liquid carbon dioxide.

3. The method of paragraph 1 or 2, wherein the method further comprises adjusting the temperature and pressure of the reaction container above the critical point of carbon dioxide to form supercritical carbon dioxide.

4. The method of paragraph 3, wherein the method further comprises adjusting the temperature and pressure of the reaction container below the critical point of carbon dioxide to form carbon dioxide gas.

5. The method of any preceding paragraph, wherein providing a mixture of the synthetic phyllosilicate and an organic solvent or a non-organic solvent that is miscible with carbon dioxide comprises providing a mixture of the synthetic phyllosilicate and an aqueous solvent and combining with organic solvent or non-organic solvent that is miscible with carbon dioxide to form a mixture of the synthetic phyllosilicate and organic solvent or non-organic solvent that is miscible with carbon dioxide.

6. The method of any preceding paragraph, wherein combining the mixture of the synthetic phyllosilicate and organic solvent or a non-organic solvent that is miscible with carbon dioxide with carbon dioxide comprises introducing carbon dioxide gas to the reaction container and adjusting the pressure and/or temperature of the reaction container to change the carbon dioxide gas to carbon dioxide liquid or wherein the mixture is directly combined with liquid carbon dioxide.

7. The method of any preceding paragraph, wherein the method comprises making the synthetic phyllosilicate.

8. The method of any preceding paragraph, wherein the method further comprises adding a functionalization agent to the mixture of the synthetic phyllosilicate and organic solvent or non-organic solvent that is miscible with carbon dioxide prior to combining the mixture of the synthetic phyllosilicate and organic solvent or non-organic solvent that is miscible with carbon dioxide with liquid carbon dioxide.

9. The method of any preceding paragraph, wherein the synthetic phyllosilicate is selected from synthetic talc, synthetic pyrophyllites, synthetic micas, synthetic smectites, synthetic kaolinites, synthetic serpentinites, synthetic chlorites and mixtures of one or more thereof.

10. The method of any preceding paragraph, wherein the synthetic phyllosilicate has a $d_{90}/d_{10}$ equal to or less than about 10.

11. The method of any preceding paragraph, wherein the synthetic phyllosilicate has a $d_{50}$ equal to or less than about 600 nm.

12. The method of any preceding paragraph, wherein the synthetic phyllosilicate has an aspect ratio equal to or less than about 50.

13. The method of any preceding paragraph, wherein the organic solvent is an alcohol, for example ethanol.

14. The method of paragraph 5, wherein the aqueous solvent is water.

15. The method of paragraph 8, wherein the functionalization agent is a functionalization agent that is miscible or soluble in the organic solvent or non-organic solvent that is miscible with carbon dioxide.

16. The method of paragraph 8 or 15, wherein the functionalization agent is an organic functionalization agent, an inorganic functionalization agent, a hydrophobic functionalization agent, a hydrophilic functionalization agent, an amphiphilic functionalization agent and/or a charged functionalization agent.

17. The method of paragraph 8, 15 or 16, wherein the functionalization agent is a trioxysilane.

18. The method of any preceding paragraph, wherein the dried synthetic phyllosilicate has a BET surface area equal to or greater than about 400 $m^2/g$, for example equal to or greater than about 700 $m^2/g$.

19. A dried synthetic phyllosilicate obtained by and/or obtainable by the method of any one of paragraphs 1 to 18.

20. A synthetic phyllosilicate having:

a BET surface area equal to or greater than about 400 $m^2/g$;
a $d_{90}/d_{10}$ equal to or less than about 10;
a $d_{50}$ equal to or less than about 600 nm; and/or
a shape factor equal to or less than about 50.

21. The synthetic phyllosilicate of paragraph 20, wherein the synthetic phyllosilicate is not a functionalized synthetic phyllosilicate.

22. The synthetic phyllosilicate of paragraph 20, wherein the synthetic phyllosilicate is a functionalized synthetic phyllosilicate.

23. The synthetic phyllosilicate of any one of paragraphs 20 to 22, wherein the synthetic phyllosilicate has a BET surface area equal to or greater than about 700 $m^2/g$.

24. The synthetic phyllosilicate of any one of paragraphs 20 to 23, wherein the synthetic phyllosilicate is selected from synthetic talc, synthetic pyrophyllites, synthetic micas, synthetic smectites, synthetic kaolinites, synthetic serpentinites, synthetic chlorites and mixtures of one or more thereof.

## Claims

**1.** A method for drying a synthetic phyllosilicate, the method comprising:

providing a mixture of the synthetic phyllosilicate and an organic solvent or a non-organic solvent that is miscible with carbon dioxide in a reaction container; and
combining the mixture with carbon dioxide.

**2.** The method of claim 1, wherein the method comprises combining the mixture with liquid carbon dioxide.

**3.** The method of claim 1 or 2, wherein the method further comprises adjusting the temperature and pressure of the reaction container above the critical point of carbon dioxide to form supercritical carbon dioxide.

**4.** The method of claim 3, wherein the method further comprises adjusting the temperature and pressure of the reaction container below the critical point of carbon dioxide to form carbon dioxide gas.

**5.** The method of any preceding claim, wherein providing a mixture of the synthetic phyllosilicate and an organic solvent or a non-organic solvent that is miscible with carbon dioxide comprises providing a mixture of the synthetic phyllosilicate and an aqueous solvent and combining with organic solvent or non-organic solvent that is miscible with carbon dioxide to form a mixture of the synthetic phyllosilicate and organic solvent or a non-organic solvent that is miscible with carbon dioxide.

**6.** The method of any preceding claim, wherein the method comprises making the synthetic phyllosilicate.

**7.** The method of any preceding claim, wherein the method further comprises adding a functionalization agent to the mixture of the synthetic phyllosilicate and organic solvent or non-organic solvent that is miscible with carbon dioxide prior to combining the mixture of the synthetic phyllosilicate and organic solvent or non-organic solvent that is miscible with carbon dioxide with liquid carbon dioxide.

**8.** The method of any preceding claim, wherein the synthetic phyllosilicate is selected from synthetic talc, synthetic pyrophyllites, synthetic micas, synthetic smectites, synthetic kaolinites, synthetic serpentinites, synthetic chlorites and mixtures of one or more thereof.

**9.** The method of any preceding claim, wherein the organic solvent is an alcohol, for example ethanol.

**10.** The method of claim 5, wherein the aqueous solvent is water.

**11.** The method of claim 7, wherein the functionalization agent is a functionalization agent that is miscible or soluble in the organic solvent or non-organic solvent that is miscible with carbon dioxide.

**12.** The method of claim 7 or 11, wherein the functionalization agent is an organic functionalization agent, an inorganic functionalization agent, a hydrophobic functionalization agent, a hydrophilic functionalization agent, an amphiphilic functionalization agent and/or a charged functionalization agent.

**13.** The method of claim 7, 11 or 12, wherein the functionalization agent is a trioxysilane.

**14.** A dried synthetic phyllosilicate obtained by and/or obtainable by the method of any one of claims 1 to 13.

**15.** A synthetic phyllosilicate having:

a BET surface area equal to or greater than about 400 $m^2/g$;
a $d_{90}/d_{10}$ equal to or less than about 10;
a $d_{50}$ equal to or less than about 600 nm; and/or
a shape factor equal to or less than about 50.

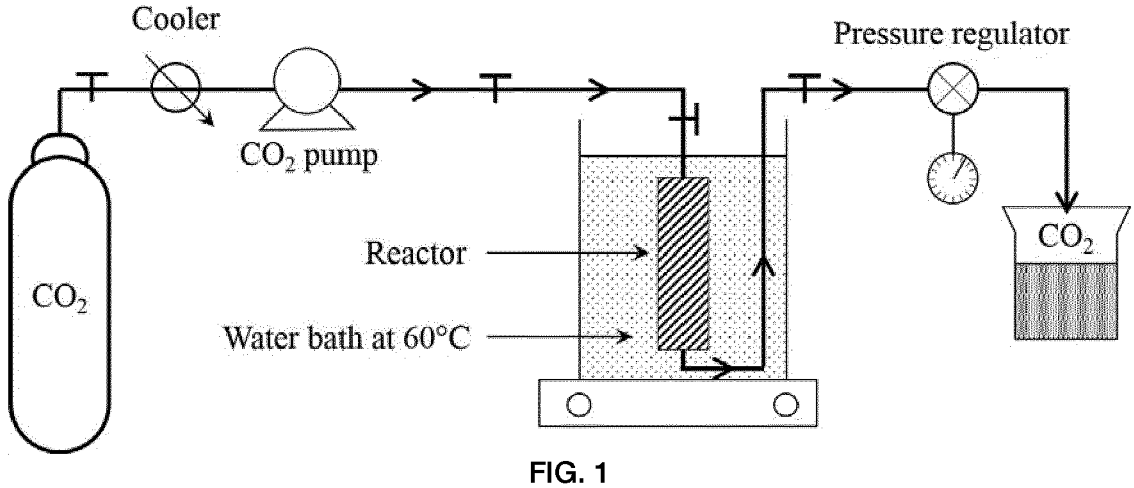
Cooler
$CO_2$ pump
Pressure regulator
$CO_2$
Reactor
Water bath at 60°C
$CO_2$

FIG. 1

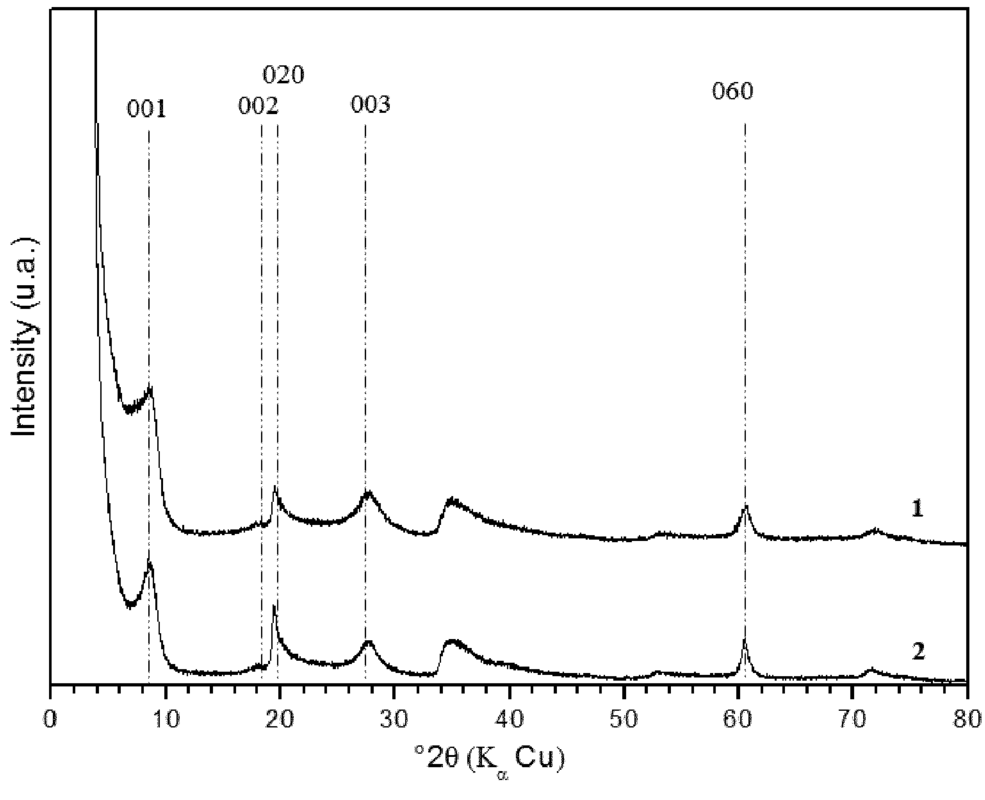
Intensity (u.a.)
001
002
020
003
060
1
2
0
10
20
30
40
50
60
70
80
°2θ ($K_\alpha$ Cu)

FIG. 2

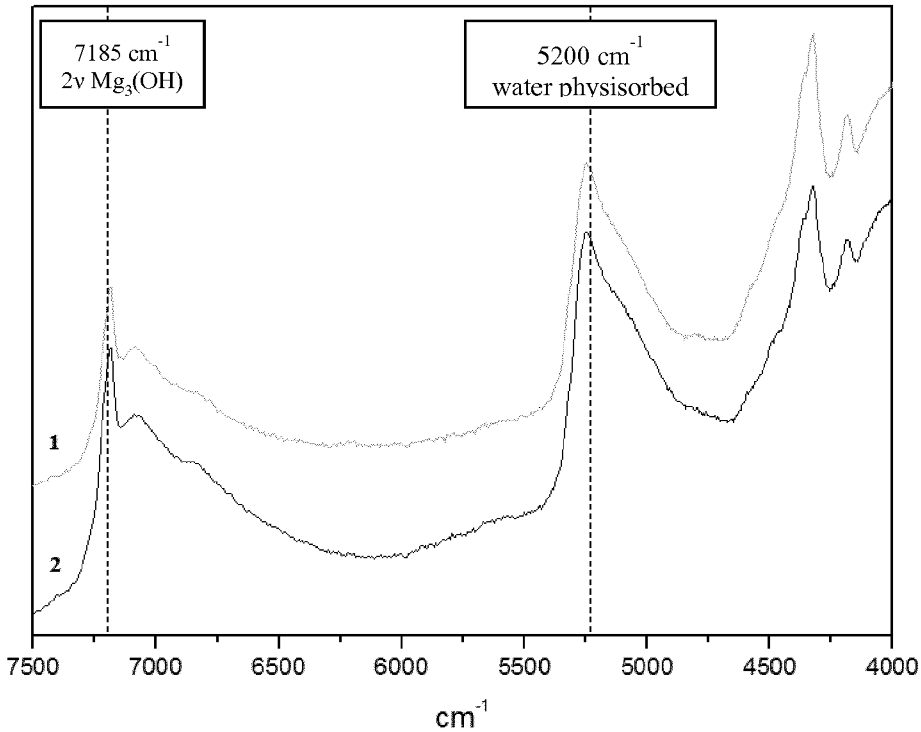
7185 cm-1
2ν Mg3(OH)
5200 cm-1
water physisorbed
1
2
7500
7000
6500
6000
5500
5000
4500
4000
cm-1

FIG. 3

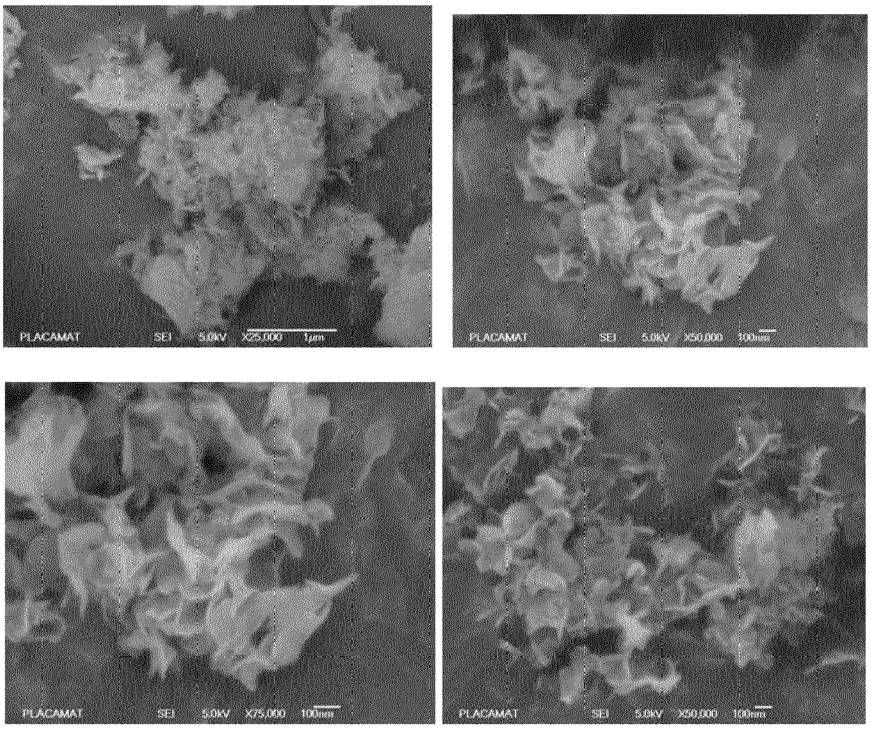
PLACAMAT SEI 5.0kV X25,000 1μm
PLACAMAT SEI 5.0kV X50,000 100nm
PLACAMAT SEI 5.0kV X75,000 100nm
PLACAMAT SEI 5.0kV X50,000 100nm

FIG. 4

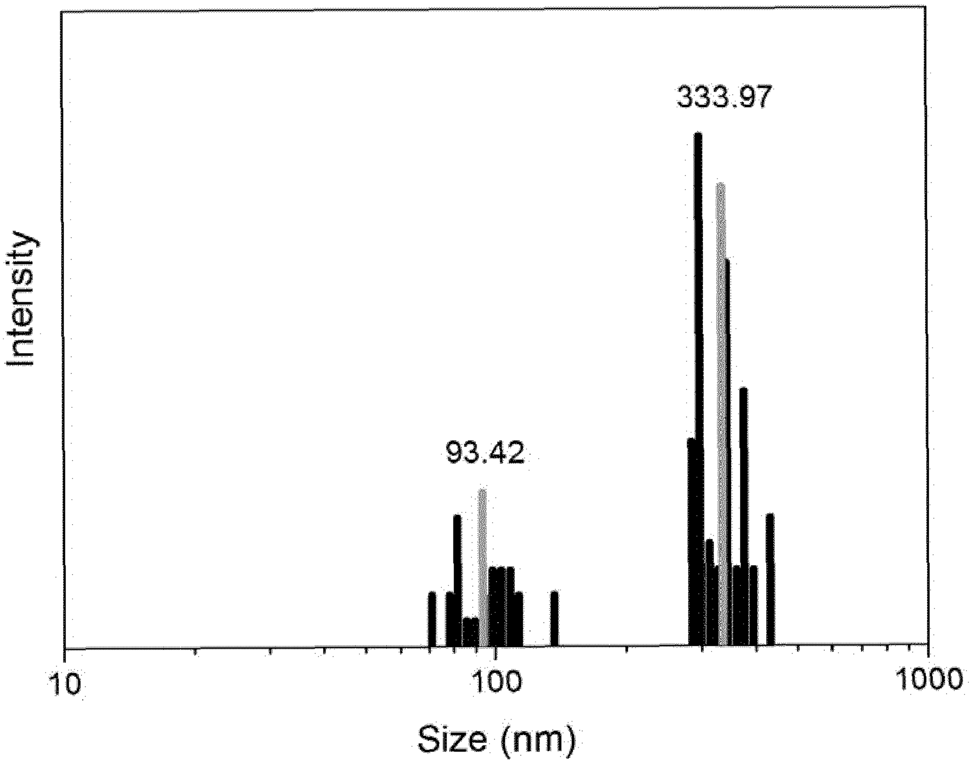
333.97
93.42
Intensity
10
100
1000
Size (nm)

FIG. 5

(A) RMN $^1H$ :

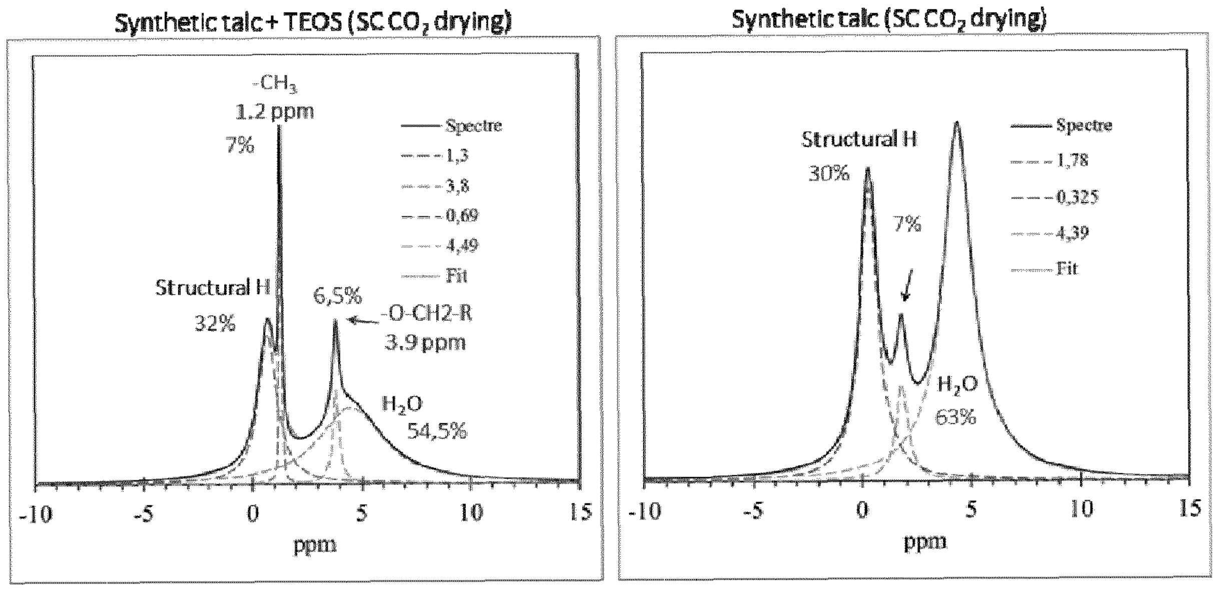
Synthetic talc + TEOS (SC CO2 drying)
-CH3
1.2 ppm
7%
Spectre
1,3
3,8
0,69
4,49
Fit
Structural H
32%
6,5%
-O-CH2-R
3.9 ppm
H2O
54,5%
ppm
Synthetic talc (SC CO2 drying)
Structural H
30%
7%
Spectre
1,78
0,325
4,39
Fit
H2O
63%
ppm

(B) RMN $^{29}Si$ :

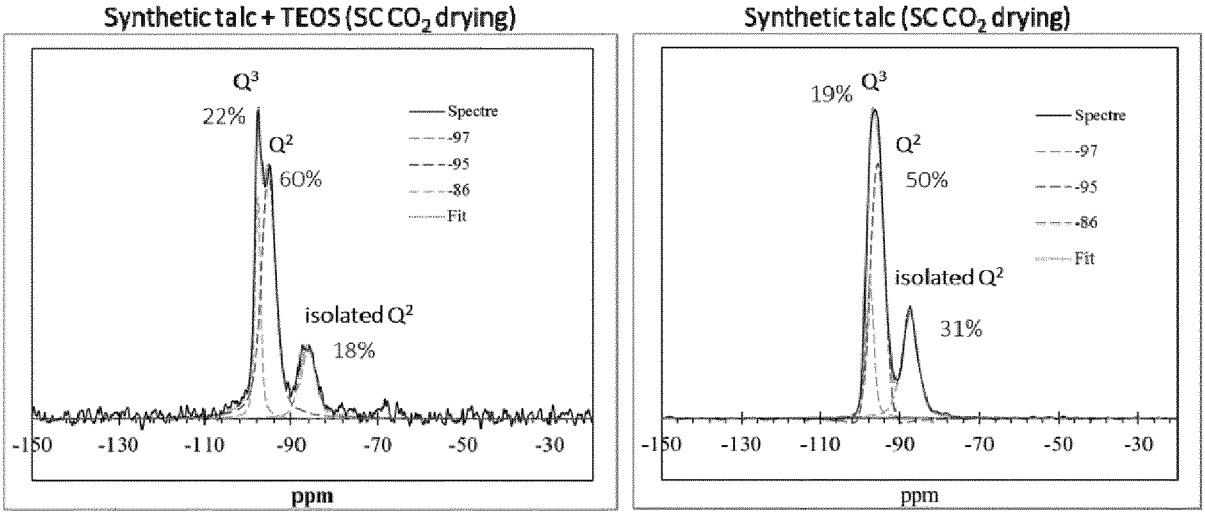


(C) RMN $^{13}C$ :

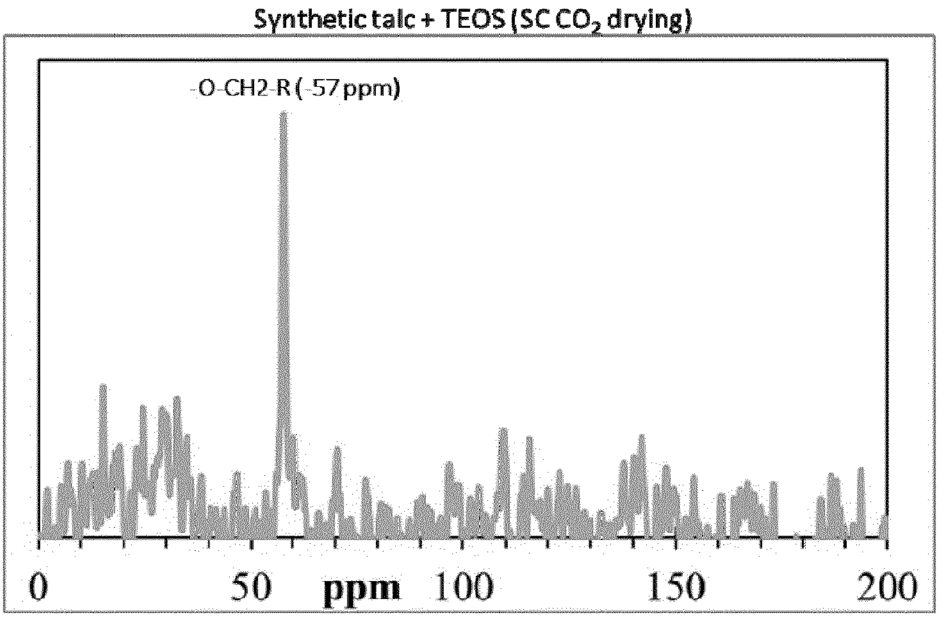


FIG. 6

(D)

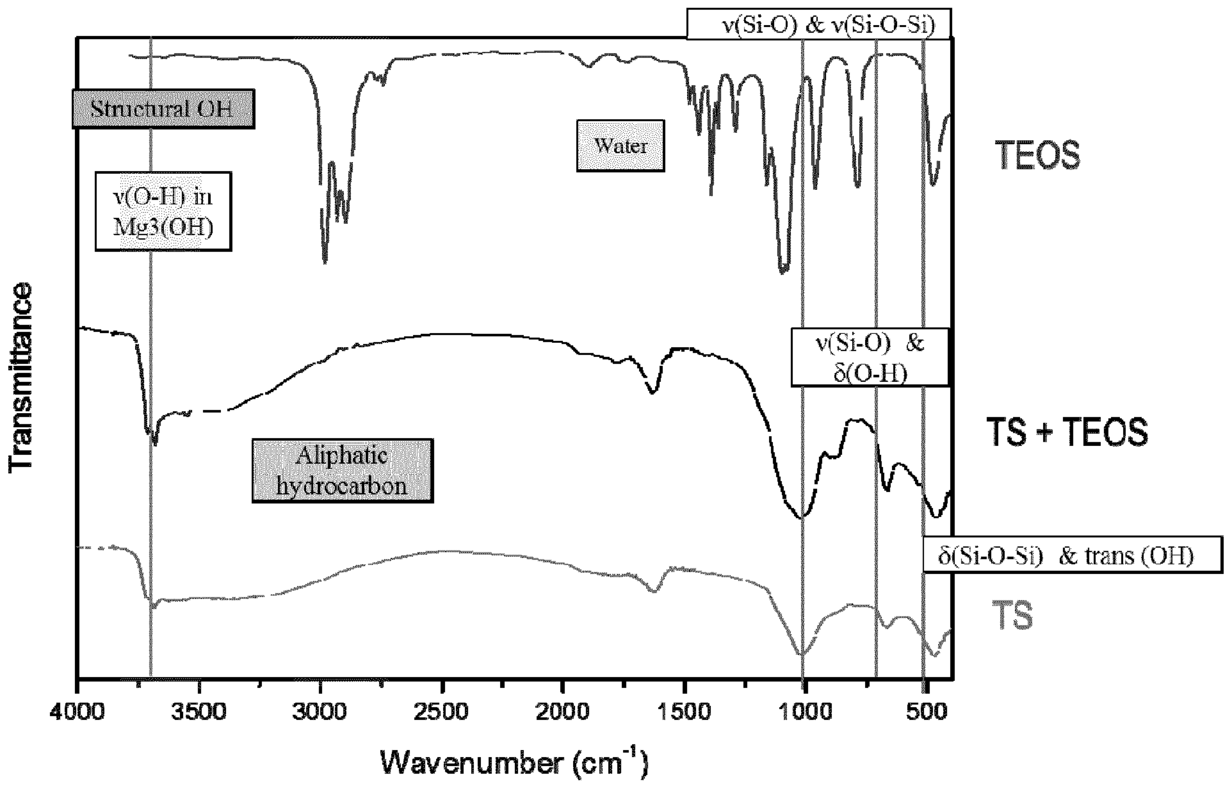

ν(Si-O) & ν(Si-O-Si)
Structural OH
Water
ν(O-H) in Mg3(OH)
TEOS
Transmittance
ν(Si-O) & δ(O-H)
TS + TEOS
Aliphatic hydrocarbon
δ(Si-O-Si) & trans (OH)
TS
4000
3500
3000
2500
2000
1500
1000
500
Wavenumber (cm-1)


FIG. 7

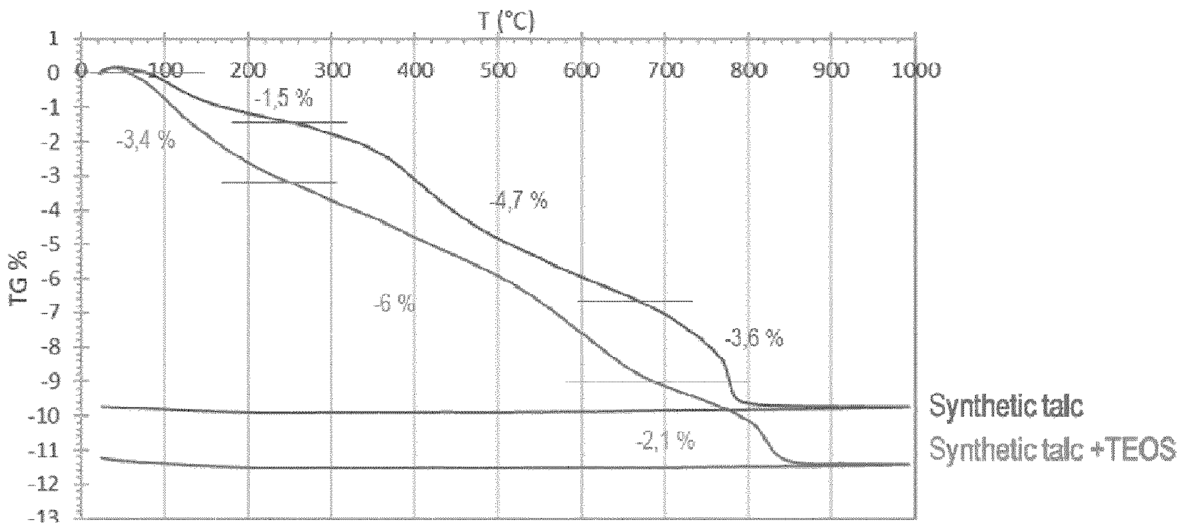

T (°C)
TG %
-1,5 %
-3,4 %
-4,7 %
-6 %
-3,6 %
-2,1 %
Synthetic talc
Synthetic talc +TEOS


FIG. 8

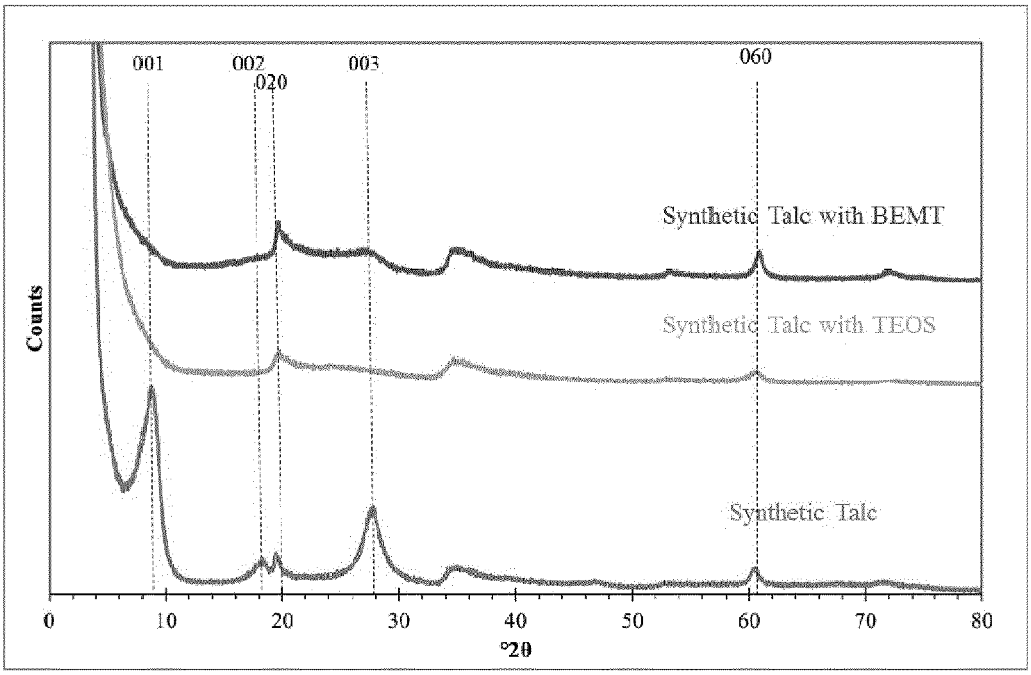
001
002
020
003
060
Synthetic Talc with BEMT
Synthetic Talc with TEOS
Synthetic Talc
Counts
0
10
20
30
40
50
60
70
80
°2θ

FIG. 9

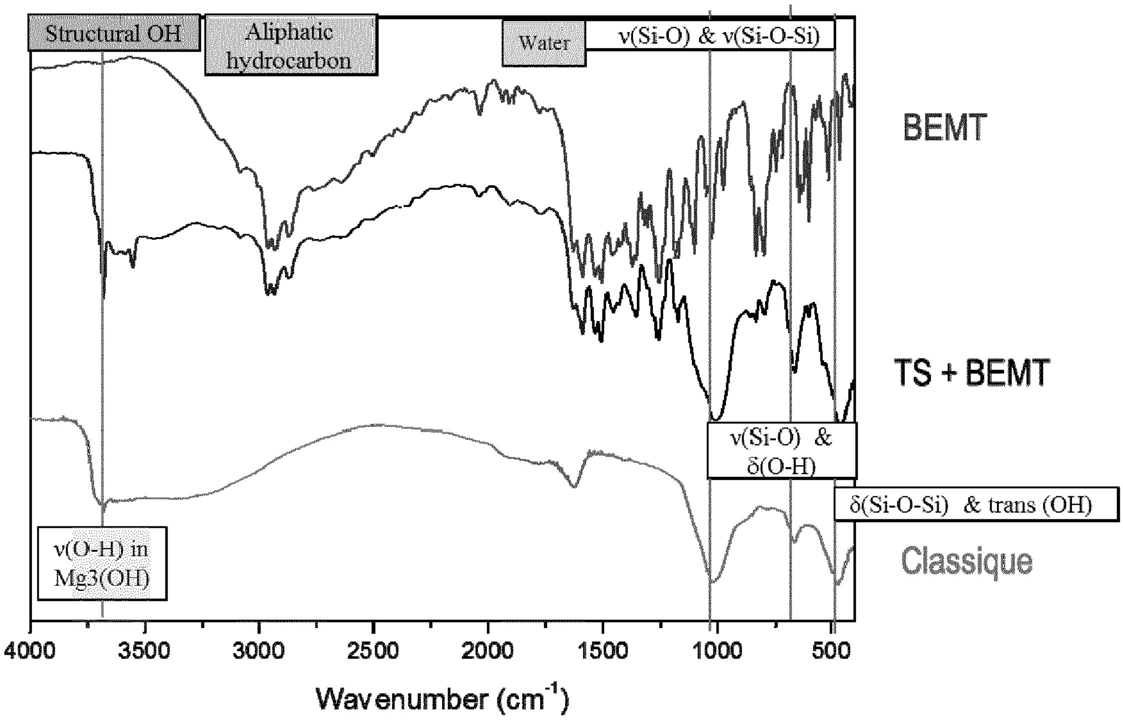
Structural OH
Aliphatic hydrocarbon
Water
ν(Si-O) & ν(Si-O-Si)
BEMT
TS + BEMT
ν(Si-O) & δ(O-H)
δ(Si-O-Si) & trans (OH)
ν(O-H) in Mg3(OH)
Classique
4000
3500
3000
2500
2000
1500
1000
500
Wavenumber (cm-1)

FIG. 10

Europäisches Patentamt
European Patent Office
Office européen des brevets

# EUROPEAN SEARCH REPORT

Application Number
EP 17 30 6972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/140842 A1 (STASSIN FABRICE [BE] ET AL) 29 June 2006 (2006-06-29)<br>* paragraphs [0001] - [0007] *<br>* examples 1-6 *<br>----- | 1-5,7,8, 10-12, 14,15 | INV.<br>C01B33/20<br>C01B33/32 |
| X<br>Y | US 2016/137849 A1 (LE ROUX CHRISTOPHE [FR] ET AL) 19 May 2016 (2016-05-19)<br>* paragraphs [0006] - [0163] *<br>* example 1 *<br>----- | 14,15<br>1-13 | |
| X<br>Y | EP 0 306 172 A1 (CORNING GLASS WORKS [US]) 8 March 1989 (1989-03-08)<br>* page 2, lines 1-3 *<br>* page 3, line 23 - page 5, line 30 *<br>----- | 14<br>1-13 | |
| | | | TECHNICAL FIELDS SEARCHED (IPC)<br>C01B |

The present search report has been drawn up for all claims

1

| Place of search | Date of completion of the search | Examiner |
|---|---|---|
| The Hague | 15 June 2018 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 30 6972

This annex lists the patent family members relating to the patent documents cited in the above-mentioned European search report. The members are as contained in the European Patent Office EDP file on
The European Patent Office is in no way liable for these particulars which are merely given for the purpose of information.

15-06-2018

| Patent document cited in search report | Publication date | Patent family member(s) | Publication date |
|---|---|---|---|
| US 2006140842 A1 | 29-06-2006 | AT 525423 T | 15-10-2011 |
| | | EP 1484357 A1 | 08-12-2004 |
| | | EP 1636298 A1 | 22-03-2006 |
| | | EP 1636299 A1 | 22-03-2006 |
| | | US 2006140842 A1 | 29-06-2006 |
| | | WO 2004108805 A1 | 16-12-2004 |
| | | WO 2004108806 A1 | 16-12-2004 |
| US 2016137849 A1 | 19-05-2016 | CN 105579397 A | 11-05-2016 |
| | | EP 3013747 A1 | 04-05-2016 |
| | | FR 3007752 A1 | 02-01-2015 |
| | | JP 2016526525 A | 05-09-2016 |
| | | US 2016137849 A1 | 19-05-2016 |
| | | WO 2014207397 A1 | 31-12-2014 |
| EP 0306172 A1 | 08-03-1989 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008009800 A
- US 20090253569 A
- WO 2008009801 A
- US 20090252963 A
- WO 2008009799 A
- US 20090261294 A
- WO 20120852391 A
- FR 2012051594 W


### Non-patent literature cited in the description


- **CLAVERIE et al.** Synthetic Talc and Talc-Like Structures: Preparation, Features and Applications. *Chem. Eur. J.,* 2017, 23